# EUROPEAN PATENT APPLICATION

(11) **EP 2 945 236 A2**
(43) Date of publication of application: **18.11.2015**
(21) Application number: 15166562.7
(22) Date of filing: 06.05.2015
(51) Int. Cl.: H02G 3/04

(54) **SHIELDED CONDUCTIVE PATH**

(30) Priority: 16.05.2014 JP 2014102531
(71) Applicant: Sumitomo Wiring Systems, Ltd., Yokkaichi Mie 510-8503 (JP)
(72) Inventor: Sugino, Hidetoshi, Yokkaichi, Mie 510-8503 (JP)
(74) Representative: Horn Kleimann Waitzhofer Patentanwälte PartG mbB

(57) **Abstract**

A shielded conductive path capable of being easily managed in terms of a length of a portion of a single core wire protruding from a shield pipe is provided. A shield pipe 30 electromagnetically shields a plurality of single core wires 10 inserted into the shield pipe 30. Each single core wire 10 is made of a single conductor 11 as a core wire. The shield pipe 30 is provided with wire insertion paths 31 into which the single core wires 10 can be inserted individually. In this configuration, the single core wire 10 is securely positioned inside of the shield pipe 30, making it possible to predict a length of a portion protruding from the shield pipe 30 and easily manage the length of the portion of the single core wire 10 protruding from the shield pipe 30.

## Description

### TECHNICAL FIELD

The present invention relates to a shielded conductive path.

### BACKGROUND ART

Conventionally, in vehicles such as hybrid automobiles, a plurality of wires are disposed under a floor of the vehicle, in order to connect a device such as a high voltage battery provided at a rear part of the vehicle, for example, with a device such as an inverter or a fuse box provided at a front part of the vehicle. Regarding this configuration, it is known that wires may be inserted into a metallic shield pipe for protecting the wires from interference of contaminants as well as electromagnetic shielding (as described in JP 2004-171952A, for example). The shielded conductive path having this configuration is inserted into the shield pipe and then processed by means of a bending process so as to extend along a predetermined routing path after the wires.

JP 2004-171952A is an example of related art.

Most of the wires inserted into shield pipes are core wires formed of stranded wires which are formed by bundling and twisting a plurality of bare wires. In order to insert the flexible stranded wire into the shield pipe, it is necessary to increase a diameter of the shield pipe to some extent. However, in the shielded conductive path arranged under the floor of the vehicle, it is desirable to decrease the diameter of the shield pipe in consideration of minimum ground clearance. To accommodate this, it is conceivable that the wire is formed of a single core wire which is made of a single conductor as a core wire, instead of the stranded wire described above, making it possible to decrease the diameter of the wire itself. In addition, the single core wire is less flexible and can be inserted into a shield pipe having a small diameter, so that it is conceivable to decrease the diameter of the shield pipe.

However, there is a difficulty in setting a length of a portion protruding from the shield pipe to a desired length. This difficulty arises from the length of the portion protruding from the shield pipe varying depending on the position of the single core wire inside the shield pipe in the process of bending the shield pipe. For example, if the single core wires have the same length, the length of the portion protruding from the shield pipe is larger for a single core wire running inside than for a single core wire running outside at a curve of the shield pipe. The adjustment in the length of the portion protruding from the shield pipe can be made for the wires by warping the stranded wire after the bending process. However, the single core is less flexible, and it is difficult to make such an adjustment after the bending process.

The plurality of the single core wires inserted into the shield pipe are different from each other in the length of the portion protruding from the shield pipe, because the positions of the single core wires are biased inwardly or outwardly, or deviated inwardly and outwardly. The shield pipe is bent three-dimensionally, making it very difficult to predict the positions of the single core wires after the bending process. It is difficult to predict the length of the portion protruding from the shield pipe in advance in order to set the length to a predetermined length. A solution for this problem is desired.

The present invention has been accomplished in view of the above problems, and is aimed to provide a shielded conductive path capable of being easily managed in terms of the length of the portion protruding from the shield pipe.

### SUMMARY OF THE INVENTION

A shielded conductive path according to one aspect of the present invention is provided with a shield pipe electromagnetically shielding a plurality of single core wires inserted into the shield pipe. Each single core is made of a single conductor as a core wire. The shield pipe is provided with wire insertion paths into which the single core wires can be inserted individually.

According to the present invention, the respective single core wires are securely positioned in the shield pipe, making it possible to predict a length of a portion protruding from the shield pipe after the bending process. Therefore, it is possible to easily manage the length of the portion of the single core wire protruding from the shield pipe.

### BRIEF DESCRIPTION OF THE DRAWINGS

- Fig. 1: is a schematic lateral view showing a routing path of a shielded conductive according to Example 1.
- Fig. 2: is a partially expanded lateral cross-sectional view showing both ends of the shielded conductive path.
- Fig. 3: is a lateral cross-sectional view expanded around a portion where a single core wire is connected to a stranded wire.
- Fig. 4: is a cross-sectional view showing a cross-sectional shape of the shielded conductive path, and a cross-sectional view corresponding to a cross-section along A-A in Fig. 3.
- Fig. 5: is a cross-sectional view showing the shielded conductive path in Example 2.
- Fig. 6: is a cross-sectional view showing an example of an external shape of a shield pipe according to another Example (2).

### EMBODIMENTS OF THE INVENTION

Preferable embodiments of the present invention will be shown below. In a shielded conductor path of the present invention, the shield pipe may include a tubular main body portion and a partitioning portion which partitions the adjacent wire insertion paths, in which the partitioning portion has a bent cross-sectional shape in a direction substantially perpendicular to an axial direction of the main body portion. In this configuration, when the cross-sectional shape of the shield pipe is deformed by a bending process, the partitioning portion can be easily deformed according to this deformation, making it possible to be prevented from being damaged by stuttering.

In the shielded conductive path of the present invention, portions of the plurality of single core wires protruding from the shield pipe may have different lengths. In this configuration, ends of the single core wires are disposed to be displaced from each other, making it possible to facilitate the task of connecting the ends of single core wires with stranded wires or the like. Moreover, as the positions of connecting portions are displaced in the axial direction, it is possible to prevent an increase in a width of the shielded conductive path by arranging the connecting portions one behind the other.

In the shielded conductive path of the present invention, an end of the single core wire may be connected directly to a device installed on a vehicle. In this configuration, the work for connecting the stranded wire with single core wire is not necessary, making it possible to reduce a cost, compared to a case of connecting the stranded wires with the end of the single core wires and connecting the with the device by way of the stranded wires, for example.

### Example 1

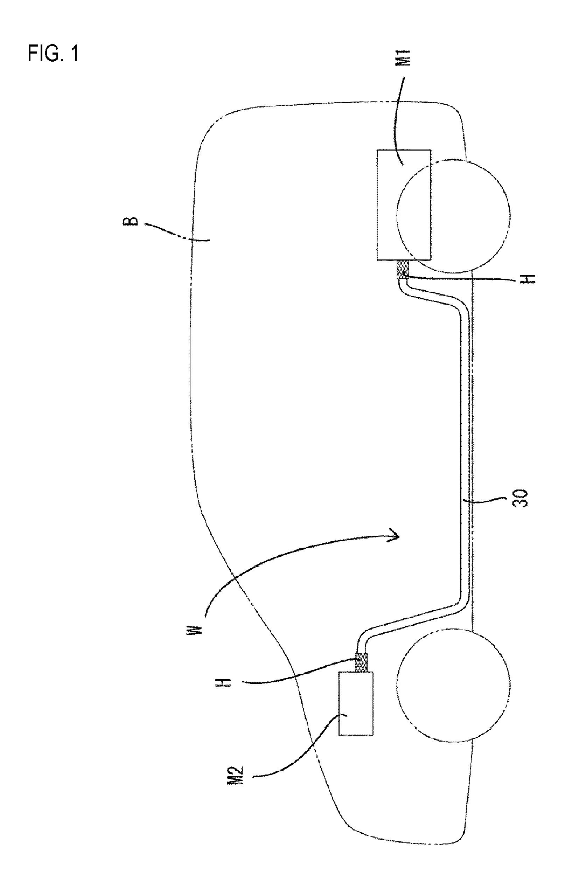

Hereinafter, one example embodying the present invention will be explained in detail with reference to Fig. 1-4.

The shielded conductive path W in this embodiment is disposed under a floor of a vehicle B, such as a hybrid vehicle, in order to connect a device M1 such as a high voltage battery provided at a rear part of the vehicle B, for example, with a device M2 such as an inverter or a fuse box provided at a front part of the vehicle B, as shown in Fig. 1. The devices M1, M2 are accommodated within an electrically conductive shield case.

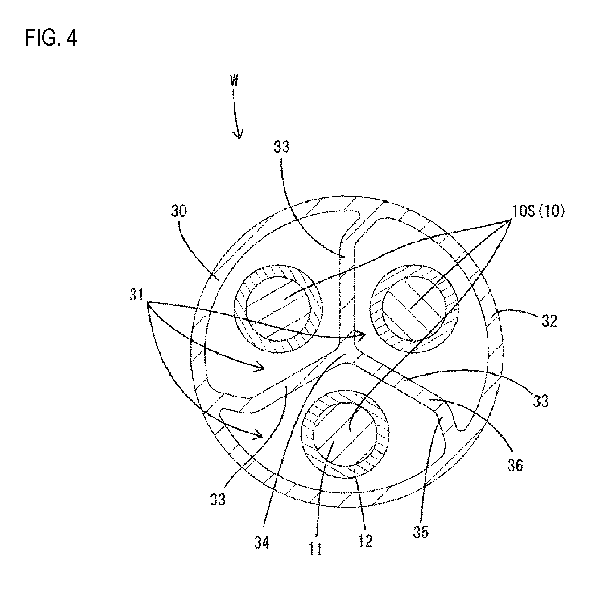

The shielded conductive path W in this Example is formed by inserting a plurality of (three in this embodiment) single core wires 10 into a metallic shield pipe 30. The single core wires 10 are non-shielded wires (see Fig. 4), which are formed by covering an outer circumference of one metal bar conductor 11 with a dielectric coating 12. The conductor 11 of the single core wires 10 is made of copper, a copper alloy, aluminum or an aluminum alloy, formed into a circular cross-sectional shape, and exhibits high rigidity with low flexibility.

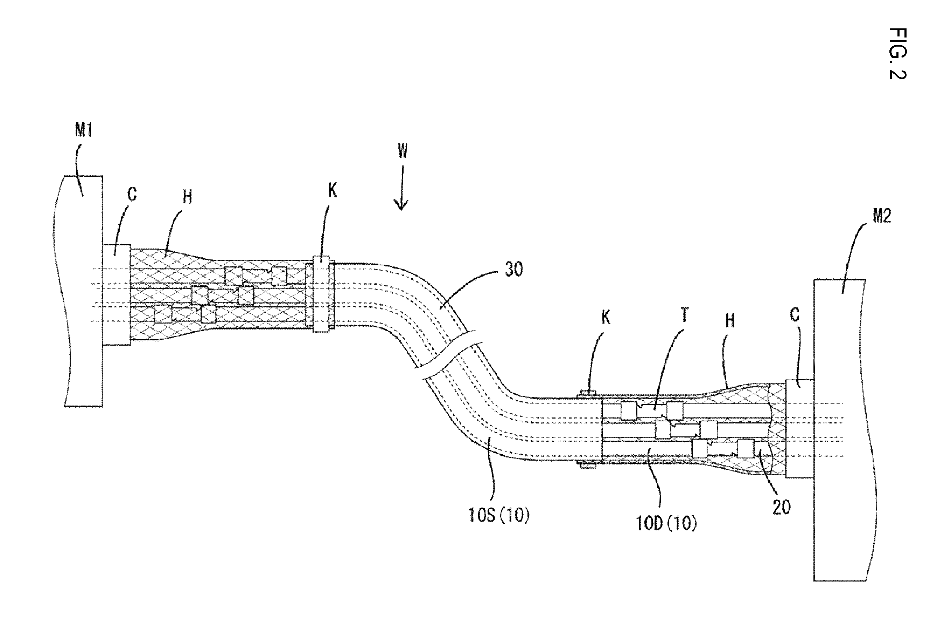

Both ends of the single core wire 10 protrude from the shield pipe 30 as shown in Fig. 2. Hereinafter, the portion of the single core wire 10 that protrudes from the shield pipe 30 is referred to as a protruding portion 10T of the single core wire 10. The three single core wires 10 differ from each other in that the length of the protruding portions 10T of each single core wire 10 is different.

The conductor 11 is exposed at the end of the protruding portion 10T of each single core wire 10 by removing the dielectric coating 12 over a predetermined range. The exposed conductor 11 is formed into a plate-shaped squeezed portion 13 which is formed by squeezing from one side. An end of a stranded wire 20 is connected to the squeezed portion 13.

The stranded wire 20 is a non-shielded wire which is formed by covering an outer circumference of a core wire 21 with a dielectric cover 22. The core wire 21 is formed by bundling and spirally twisting a plurality of bare wires. Each bare wire is made of copper, a copper alloy, aluminum or an aluminum alloy. The core wire 21 of the stranded wire 20 exhibits high rigidity with low flexibility.

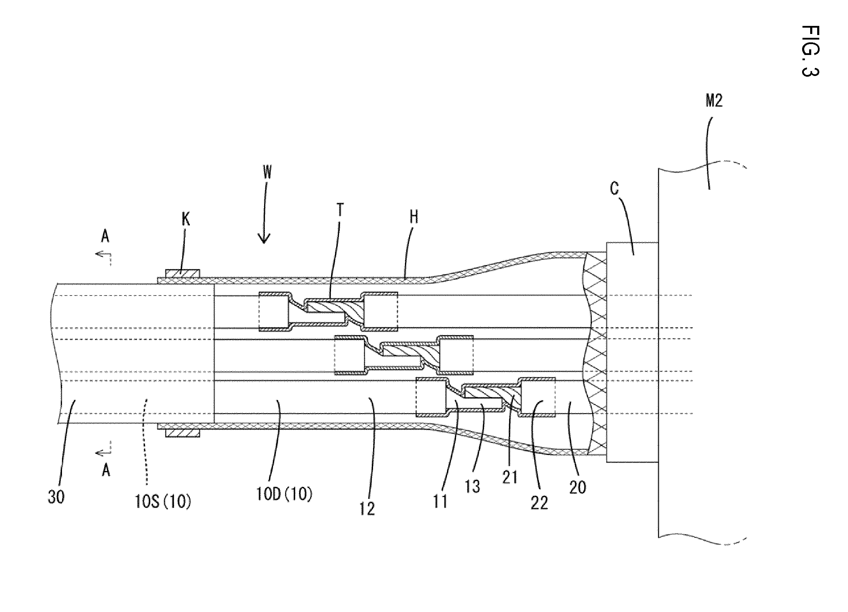

The dielectric cover 22 is removed at both ends of the stranded wire 20 respectively over predetermined ranges, and the core wire 21 is exposed (see Fig. 3). One of both ends of the stranded wire 20 is adhered to the squeezed portion 13 of the single core wire 10 by means of soldering, welding or the like, while the other end is connected to a terminal fitting not shown in drawings. The terminal fitting is accommodated within a connector C. The connector C is fitted into the connector of the device M1 or M2, enabling an electrical connection with device M1 or M2.

The portion connecting the single core wire 10 with the stranded wire 20 is covered with a thermally shrinkable tube T over its entire circumference, as shown in Fig. 3. The thermally shrinkable tube T is attached to cover and link the dielectric coating 22 of the single core wire 10 to the dielectric cover 22 of the stranded wire 20. In this configuration, the portion connecting the single core wire 10 with the stranded wire 20 is maintained at an insulating state or a sealed state.

The protruding portion 10T of the single core wire 10 and the portion of the stranded wire 20 that protrudes from the connector C are surrounded altogether by a braid member H, as shown in Fig. 3. The braid member H is formed by weaving electrically conductive metal (for example, copper) thin wires in mesh form and shaping it into a tube. It is also possible to surround them with a metal film or a slitted metal film instead of the braid member H.

One end of the braid member H is adhered to the outer circumference of the shield pipe 30 with a metal band K by means of crimping so as to be electrically conductive, while the other end is adhered to the connector C so as to be electrically conductive therebetween.

The shield pipe 30 is metallic (iron, aluminum, copper, stainless steel or the like), and bent three-dimensionally along the routing path of the single core wire 10, as shown in Fig. 1. Other than a metallic shield pipe, the shield pipe 30 may also be an electrically conductive resin pipe.

As shown in Fig. 4, the shield pipe 30 is provided with three wire insertion paths 31 in which the single core wires are capable of being inserted individually. The wire insertion paths 31 are formed to partition the inner space of the shield pipe 30 substantially into three spaces. Each wire insertion path 31 is the space which is arranged to be closed in the circumferential direction thereof and opened only in the axial direction thereof.

The shield pipe 30 has a main body portion 32 which is formed into a tubular shape capable of surrounding the three single core wires 10 altogether, and partitioning portions 33 serving as partitions between adjacent wire insertion paths 31. The main body portion 32 and the partitioning portions 33 are integrally formed by extrusion molding.

The main body 32 is formed into a perfectly circular shape. Each partitioning portion 33 is formed over an entire length of the shield pipe 30. Three partitioning portions 33 are provided, and formed to have substantially the same shape. The three partitioning portions 33 extend from the position of the central axis of the main body 32 radially towards an inner circumferential surface of the main body 32. The three partitioning portions 33 are connected to each other at the position of the central axis of the main body 32, and connected to the inner circumferential surface of the main body 32. Hereinafter, the end of each partitioning portion 33 that is positioned on the center side of the main body 32 (the portion connecting the partitioning portions 33 with each other) is referred to as a first end portion 34, and the end of each partitioning portion 33 that is positioned on the inner circumferential surface side (a portion connecting with the main portion 32) is referred to as a second end portion 35.

As shown in Fig. 4, the cross-sectional shape (cross-sectional shape in a direction substantially perpendicular to the axial direction of the main body 32) of the partitioning portion 33 is formed to be bent at an intermediate portion inward of the main body 32. Each partitioning portion 33 is tilted (or kinked) with respect to the radial direction of the main body 32. The bent portions (referred to as bent portions 36, hereinafter) of each partition portion 33 are formed to be positioned in proximity to the second end portions 35 (e.g. closer to the second end portions 35 than to the first end portions 34). The bending directions of the bent portions 36 of the three partition portions 33 are aligned (e.g. defining the same bending angle). All of the bent portions 36 are positioned forward from the first end portion 34 and the second end portion 35 in a counterclockwise direction about the central axis of the main body 32.

Next, one example of fabrication work of the shielded conductive path W in this Example will be explained. First, the single core wire 10 is cut to a predetermined length. The lengths of three single core wires 10 are calculated on the basis of a predicted length (path length) of each wire insertion path 31 of the shield pipe 30 processed by the bending process. Herein, the wire insertion path 31 disposed on an inner side at the curve of the shield pipe 30 has a shorter path length than the wire insertion path 31 disposed on an outer side. Accordingly, for example, when the top side and bottom side in Fig. 4 are arranged to be the exterior side and interior side of the curve respectively, the two wire insertion paths 31 on the top side have larger path lengths than the one wire insertion path 31 on the bottom side. With this arrangement, the path length is calculated for each wire insertion path 31 on the basis of the curve direction of each curve and the position of each wire insertion path 31, and added to the path length at the linear parts of the wire insertion path 31. With this calculation, a length of an entire length of wire insertion path 31, namely a length of a portion (referred to as a main portion 10M, hereinafter) of the single core wire 10 disposed inside the shield pipe 30 is calculated for each single core wire 10. Next, for each single core wire 10, the length of the protruding portion 10T is added to the length of the main portion 10M for calculation of the total length. Then, each single core wire 10 is cut to have the calculated total length.

Next, the three single core wires 10 are inserted into the shield pipe 30. The single core wires 10 having corresponding lengths are inserted into respective wire insertion paths 31. One end of the single core wires 10 is set to protrude for a predetermined length (the length of the protruding portion 10T predicted in advance) from the shield pipe 30, and fixed such that the protruding portion 10T is not pulled inside the shield pipe 30 during the bending process.

Next, the shield pipe 30 which the single core wire 10 is inserted into is processed by the bending process so as to be formed into a predetermined shape. The wire insertion paths 31 are bent by the bending process of the shield pipe 30 substantially as expected. The single core wires 10 inserted into the wire insertion paths 31 are bent along the bent shape (path) of the wire insertion paths 31. Herein, at the curves of the shield pipe 30 in which the cross-sectional shape of the shield pipe 30 is deformed, the partitioning portions 33 are bent at the bent portions 36 to follow the deformation. Therefore, the partition portions 33 are prevented from functioning as sticks inhibiting the deformation of the shield pipe 30, and from being damaged due to the deformation of the shield pipe 30 and the like.

Next, the other side (not fixed side) of the single core wires 10 are pulled inside of the shield pipe 30 by the bending process. In this situation, a single core wire 10 that is inserted through a wire insertion path 31 extending mostly on outer sides at the curves of the shield pipe 30 is pulled in to a larger extent, compared to a single core wire 10 that is inserted through the wire insertion path 31 extending mostly on inner sides. In this configuration, the protruding portion 10T of each single core wire 10 on the other edge side of the shield pipe 30 protrudes from the shield pipe 30 by the predicted length, allowing the lengths of the protruding portions 10T of both ends of the single core wire 10 to be predicted lengths.

Next, the stranded wires 20 are connected to both ends of the single core wires 10. In this connection, the ends of the single core wires 10, namely the portions connected to the stranded wires 20 are displaced stepwise in axial direction, facilitating the connection work. Moreover, as the positions of the connection portions are not aligned in the axial direction, it is possible to prevent the width of the shielded conductive path W from being increased at those portions (prevent the shielded conductive path W from bulging).

With the above processes, the fabrication work of the shielded conductive path W is completed.

Next, functions and advantageous effects of Example 1 configured in the above will be explained. In the shielded conductive path W according to this Example, the shield pipe 30 electromagnetically shielding the plurality of single core wires 10 is provided with wire insertion paths 31 in which the single core wires can be inserted individually. Each single core wire 10 is made of a single conductor 11 as a core wire and inserted into the shield pipe 30. With this configuration, the positions of the single core wires 10 inside the shield pipe 30 can be prevented from being swapped , and the single core wires 10 are securely positioned inside the shield pipe 30, making it possible to predict the lengths of the protruding portions 10T protruding from the shield pipe 30 in advance and easily manage the lengths of the protruding portions 10T of the single core wires 10.

Moreover, the shield pipe 30 has the tubular main body portion 32 and the partitioning portions 33 partitioning the adjacent wire insertion paths 31. The partitioning portions 33 are formed to have bent cross-sectional shapes in the direction substantially perpendicular to the axial direction of the main body 32. In this configuration, when deforming the cross-sectional shape of the shield pipe 30 by the bending process, the partitioning portions 33 are easily bent to follow the deformation, making it possible to sustain the partitioning portions 33 and to prevent them from being damaged.

In addition, the protruding portions 10T of the plurality of single core wires 10 protruding from the shield pipe 30 have different lengths. In this configuration, the ends of the single core wires are shifted with respect to each other, making it possible to facilitate the connection work for the connecting the stranded wires 20 with the ends of the single core wires 10. Since the positions of connecting portions are shifted in the axial direction, the connection portions are lined up one behind the other, making it possible to prevent the width of the shielded conductive path W from increasing.

### Example 2

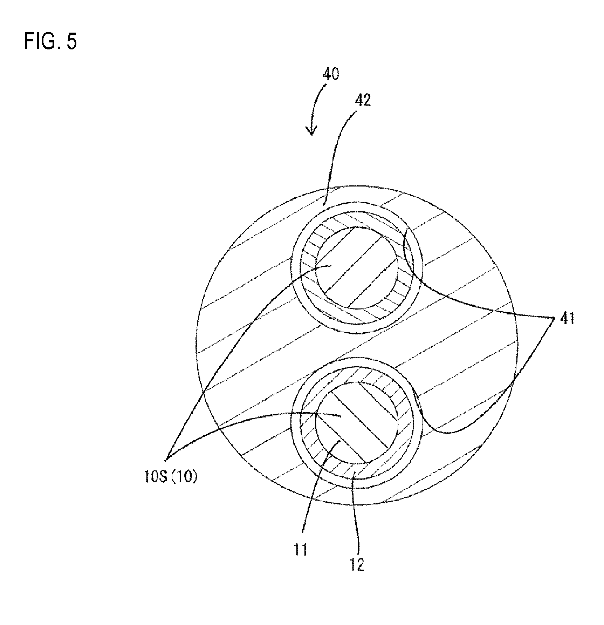

Next, the shielded conductive path 40 according to Example 2 embodying the present invention will be explained with reference to Fig. 5. The shielded conductive path 40 in this Example differs from Example 1 in that the wire insertion path 41 is formed to extend along the outer circumferential surface of the single core wire 10. The same numerals will be assigned to the same structures as in Example 1, and duplicate explanations will be omitted.

Similarly to Example 1, in the shielded conductive path 40 according to this Example, the shield pipe 42 electromagnetically shielding the plurality of (two in this Example) single core wires 10 is provided with wire insertion paths 41 in which the single core wires 10 are capable of being inserted individually. Each single core wire 10 is made of a single conductor 11 as a core wire and inserted into the shield pipe 42.

Two wire insertion paths 41 are provided. Similarly to Example 1, the single core wires 10 are inserted into the wire insertion paths 41. The two wire insertion paths 41 are disposed to be aligned in a radial direction of the shield pipe 42.

Each wire insertion path 41 has a circular cross-sectional shape with an inner diameter that is set to be as close as possible to the outer diameter of the single core wire 10. The wire insertion paths 41 are securely provided with minimum clearances to allow insertion of the single core wires 10 therethrough.

As described above, according to this example, the shield pipe 42 electromagnetically shielding the two single core wires 10 is provided with wire insertion paths 41 into which the single core wires 10 can be inserted individually. Each single core wire 10 is made of a single conductor 11 as a core wire and inserted into the shield pipe 42. With this structure, similarly to Example 1, the single core wires 10 are securely positioned inside the shield pipe 42, and therefore it is possible to predict the lengths of the portions protruding from the shield pipes 42 and easily manage the lengths of the portions of the single core wires 10 protruding from the shield pipes 42. Moreover, the wire insertion paths 41 have circular cross-sectional shapes fitted to the outer circumferential surfaces of the single core wires 10, and therefore it is possible to decrease the diameters of the shield pipes 42.

### Other Examples

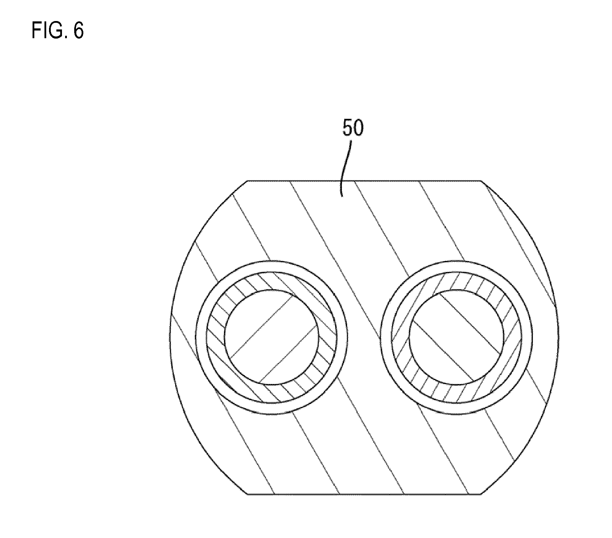

The present invention is not limited to the examples explained by the above description with reference to drawings, and the technical scope of the present invention includes the following examples, for example.
(1) In the above examples, the shielded conductive path W (40) is connected to the devices M1, M2 by way of the stranded wires 20 connected to both ends of the single core wire 10. However, the present invention is not limited to this connection. For example, in case the shielded conductive path is connected to a relatively weakly vibrating device, it is possible to directly connect the end of the single core wires with the device, not by way of the stranded wire in the side of connecting with the device. This connection does not require the work for connecting the stranded wires to the single core wires, achieving a reduced cost, compared to the case of connecting the stranded wires to the end of the single core wires and then connecting to the device by way of the stranded wires, for example.
(2) In the above examples, the exterior shape of the shield pipe 30 (42) is a perfectly circular cross-sectional shape. The present invention is not limited to this shape. The exterior shape of the shield pipe may have any shape such that of an ellipse or the like. In addition, the exterior shape of the shield pipe may have cutouts formed by cutting out portions serving as top and bottom sides when installed in the vehicle, while having forms substantially following a perfectly circular shape in other portions, similarly to the shield pipe 50 shown in Fig. 6, for example. With this shape, it is possible to decrease the height of the shield pipe by the dimension of the cutout portions at the top and bottom sides, compared to ordinary shield pipes, enabling a reduced space. The other portions substantially follow a perfectly circular shape similar to those of ordinary shield pipes, making it possible to use conventional pipe bender machines for the bending process.
(3) In the above examples, the lengths of the protruding portions of the plurality of single core wires 10 differ stepwise. But, the present invention is not limited to this. The lengths of the protruding portions of the single core wires 10 can be set as appropriate.
(4) In the above examples, each wire insertion path 31 is formed to be closed in the circumferential direction. The present invention is not limited to this. Each wire insertion path 31 can be partially opened in the circumferential direction, as long as it is capable of supporting individually the single core wires.
(5) In Example 1, the partitioning portion 33 has a bent cross-sectional shape. The present invention is not limited to this shape. The cross-sectional shape of the partitioning portion 33 can be changed as appropriate.
(6) In Example 2, the wire insertion path 41 has a circular cross-sectional shape. The present invention is not limited to this shape. The cross-sectional shape of the wire insertion path 41 may have any shape, for example that of a rectangle, an ellipse or the like with the same width as the outer diameter of the single core wire.

B: vehicle
M1, M2: device
W, 40: shielded conductive path
10: single core wire
10D: protruding portion (portion protruding from shield pipe)
11: conductor
30, 42, 50: shield pipe
31, 41: wire insertion path
32: main body portion
33: partitioning portion

## Claims

1. A shielded conductive path (W, 40) comprising:
a shield pipe (30, 42, 50) electromagnetically shielding a plurality of single core wires (10) inserted into the shield pipe (30, 42, 50), each single core wire (10) having a single conductor (11) as a core wire,
wherein the shield pipe (30, 42, 50) is provided with wire insertion paths (31, 41) in which the single core wires (10) can be inserted individually.

2. The shielded conductive path (W, 40) according to claim 1,
wherein the shield pipe (30, 42, 50) includes a tubular main body portion (32) and a partitioning portion (33) which partitions tubular main body portion (32) into adjacent wire insertion paths (31, 41), and
wherein the partitioning portion (33) has a bent cross-sectional shape in a direction substantially perpendicular to an axial direction of the main body portion (32).

3. The shielded conductive path (W, 40) according to claim 1 or 2,
wherein portions of the plurality of single core wires (10) protruding from the shield pipe (30, 42, 50) have different lengths.

4. The shielded conductive path (W, 40) according to any one of claims 1 to 3,
wherein an end of the single core wire (10) is connected directly to a device installed on a vehicle.
